# EUROPEAN PATENT APPLICATION

(11) **EP 4 510 402 A1**
(43) Date of publication of application: **19.02.2025**
(21) Application number: 23909929.4
(22) Date of filing: 30.11.2023
(51) Int. Cl.: H02H 5/04

(54) **OVER-TEMPERATURE PROTECTION CIRCUIT AND TEST DEVICE**

(30) Priority: 27.12.2022 CN 202211691176
(71) Applicant: Hunan Biometa Intelligent Manufacturing Technology Co., Ltd, Changsha, Hunan 410205 (CN)
(72) Inventor: DAI, Lizhong, Changsha, Hunan 410205 (CN); XIE, Yaping, Changsha, Hunan 410205 (CN); DAI, Wenbiao, Changsha, Hunan 410205 (CN); LING, Jiangang, Changsha, Hunan 410205 (CN); SHEN, Bochao, Changsha, Hunan 410205 (CN); HE, Linli, Changsha, Hunan 410205 (CN)
(74) Representative: RGTH
(86) International application number: PCT/CN2023/135572
(87) International publication number: WO 2024/139999

(57) **Abstract**

The present application discloses an over-temperature protection circuit and a test device, and relates to the field of temperature control. The over-temperature protection circuit should be configured to control a running state of a heating module connected to the over-temperature protection circuit, which includes a temperature detection module, a comparison module, a control module, and a first protection switch and a second protection switch connected in series. The temperature detection module is disposed on the heating module and configured to convert obtained temperature information of the heating module into a voltage signal, and output the voltage signal to the comparison module. The comparison module is configured to output a control level to the first protection switch according to the voltage signal. The first protection switch is connected to the heating module and is configured to be adjusted to be in an on-state or an off-state according to the control level. The control module is configured to output a control signal to the second protection switch. The second protection switch is configured to be adjusted to be in an on-state or an off-state according to the control signal.

## Description

### CROSS-REFERENCE TO RELATED APPLICATIONS

The present application claims priority to Chinese Patent Application No. 202211691176.7, filed on December 27, 2022, which is incorporated herein by reference in its entirety.

### TECHNICAL FIELD

The present application relates to the field of temperature control, and in particular, to an over-temperature protection circuit and a test device.

### BACKGROUND

With the rapid development of biotechnology, biological test devices such as a Polymerase Chain Reaction (PCR) module and a Point-Of-Care Testing (POCT) device are also continuously improved. In an operation process of a test device such as the PCR module and the POCT device, it is necessary to adjust a temperature to a required temperature through a heating apparatus in the test device to obtain required biological data. In order to avoid damage to devices of the test device due to an excessively high temperature of the heating apparatus, a control device is usually provided in the test device. The control device can cut off a connection-state between the heating apparatus and a power supply according to a received signal, thereby controlling a temperature of the heating apparatus.

However, in order to improve the accuracy of a test result, an internal structure of the test device such as the PCR module and the POCT device is more and more complex. When failure is occurred on one or more devices in a Micro Control Unit (MCU), a temperature sensor, and a controllable switch of the test device, abnormal situations such as a failure of the power supply and a signal error output to a control device are easily occurred, resulting in that the control device cannot timely cut off the connection-state between the heating apparatus and the power supply, thereby causing the heating apparatus to continuously heat. When the temperature of the heating apparatus is too high, devices in the test device may be damaged due to high temperature.

### SUMMARY

In view of this, an object of the present application is to provide an over-temperature protection circuit and a test device, and the over-temperature protection circuit is configured to solve a problem that a device in a test device is damaged due to an excessively high temperature of a heating apparatus.

According to a first aspect, the present application provides an over-temperature protection circuit, which should be configured to control a running state of a heating module connected to the over-temperature protection circuit, the over-temperature protection circuit includes a temperature detection module, a comparison module, a control module, and a first protection switch and a second protection switch connected in series;
the temperature detection module is disposed on the heating module and configured to convert obtained temperature information of the heating module into a voltage signal, and output the voltage signal to the comparison module;
the comparison module is configured to output a control level to the first protection switch according to the voltage signal;
the first protection switch is connected to the heating module and is configured to be adjusted to be in an on-state or an off-state according to the control level;
the control module is configured to output a control signal to the second protection switch; and
the second protection switch is configured to be adjusted to be in an on-state or an off-state according to the control signal.

In combination with the first aspect, in a first possible implementation, the temperature detection module includes a voltage divider circuit, and the voltage divider circuit includes a thermistor;
the thermistor is connected to the heating module; and
the voltage divider circuit is configured to obtain the voltage signal according to a resistance value of the thermistor, and output the voltage signal to the comparison module.

In combination with the first aspect, in a second possible implementation, the comparison module includes a comparator and a comparison voltage divider circuit;
an inverting input terminal of the comparator is connected to the temperature detection module, an output terminal of the comparator is connected to a non-inverting input terminal of the comparator through the comparison voltage divider circuit, and the output terminal of the comparator is further connected to the first protection switch; and
the comparator is configured to output the control level to the first protection switch according to the voltage signal and a signal of the comparison voltage divider circuit.

In combination with the first aspect, in a third possible implementation, the comparison module further includes an operational amplifier;
a non-inverting input terminal of the operational amplifier is connected to the temperature detection module, an output terminal of the operational amplifier is connected to an inverting input terminal of the comparator, and the output terminal of the operational amplifier is further connected to the inverting input terminal of the comparator; and
the operational amplifier is configured to amplify the voltage signal.

In combination with the first aspect, in a fourth possible implementation, the comparison module is further configured to output a feedback signal including an on-off state of the first protection switch to the control module;
the control module is further configured to determine the on-off state of the first protection switch according to the feedback signal output by the comparison module; and
the control module is further configured to output different control signals to the second protection switch according to the on-off state of the first protection switch.

In combination with the first aspect, in a fifth possible implementation, the first protection switch includes a first switching transistor;
a control terminal of the first switching transistor is connected to the comparison module, a first terminal of the first switch is connected to the second protection switch, and a second terminal of the first switch is connected to the heating module; and
the first switching transistor is configured to be adjusted to be in an on-state when the control level output by the comparison module is a high level, and to be adjusted to be in an off-state when the control level output by the comparison module is a low level.

In combination with the first aspect, in a sixth possible implementation, the second protection switch includes a second switching transistor;
a control terminal of the second switching transistor is connected to the control module, a first terminal of the second switch is connected to the first protection switch, and a second terminal of the second switch is grounded; and
the second switching transistor is configured to be adjusted to be in an on-state or an off-state according to the control signal.

According to a second aspect, the present application provides an over-temperature protection circuit, which should be configured to control running states of a preset number of heating modules connected to the over-temperature protection circuit, and the over-temperature protection circuit includes a control module, a logic processing module, the preset number of temperature detection modules, the preset number of comparison modules, and the preset number of first protection switches and second protection switches respectively connected in series, where the preset number is greater than or equal to two;
each of the temperature detection modules is disposed on a heating module to be protected, and is configured to convert obtained temperature information of the heating module into a voltage signal, and output the voltage signal to one of the comparison modules;
each of the comparison modules is configured to output a control level to the logic processing module according to the voltage signal;
the logic processing module is configured to output a logical level to all the first protection switches according to the control level output by each of the comparison modules;
each of the first protection switches is connected to one of the heating modules and configured to be adjusted to be in an on-state or an off-state according to the logical level;
the control module is configured to output a control signal to the second protection switches; and
each of the second protection switches is configured to be adjusted to be in an on-state or an off-state according to the control signal.

In combination with the second aspect, in a first possible implementation, the logic processing module includes an NAND logical switch;
the NAND logical switch is configured to output the logical level at a low level to all the first protection switches when the control level output by at least one of the comparison modules is a low level; and
the NAND logical switch is further configured to output the logical level at a high level to all the first protection switches when the control level output by each of the comparison modules is a high level.

In combination with the second aspect, in a second possible implementation, a first protection switch of the first protection switches includes a first switching transistor;
a control terminal of the first switching transistor is connected to the logic processing module, a first terminal of the first switch is connected to one of the second protection switches, and a second terminal of the first switch is connected to one of the heating modules; and
the first switching transistor is configured to be adjusted to be in an on-state when the logical level output by the logic processing module is a high level, and to be adjusted to be in an off-state when the logical level output by the logic processing module is a low level.

In combination with the second aspect, in a third possible implementation, a comparison module of the comparison modules includes a comparator and a comparison voltage divider circuit;
an inverting input terminal of the comparator is connected to a temperature detection module of the temperature detection modules, an output terminal of the comparator is connected to a non-inverting input terminal of the comparator through the comparison voltage divider circuit, and the output terminal of the comparator is further connected to the logic processing module; and
the comparator is configured to output the control level to the logic processing module according to the voltage signal and a signal of the comparison voltage divider circuit.

In combination with the second aspect, in a fourth possible implementation, the logic processing module is further configured to output a feedback signal including an on-off state of each first protection switch of the first protection switches to the control module;
the control module is further configured to determine the on-off state of the first protection switch according to the feedback signal output by the logic processing module; and
the control module is further configured to respectively output different control signals to each of the second protection switches according to the on-off state of the first protection switch.

According to a third aspect, the present application provides a test device, which includes a heating module, and an over-temperature protection circuit according to the first aspect, or according to the second aspect, where the over-temperature protection circuit is connected to the heating module.

The present application provides an over-temperature protection circuit, which should be configured to control a running state of a heating module connected to the over-temperature protection circuit, and the over-temperature protection circuit includes a temperature detection module, a comparison module, a control module, and a first protection switch and a second protection switch connected in series. The temperature detection module is disposed on the heating module and configured to convert obtained temperature information of the heating module into a voltage signal and output the voltage signal to the comparison module. The comparison module is configured to output a control level to the first protection switch according to the voltage signal. The control module is configured to output a control signal to the second protection switch. A first physical protection for the heating module is realized by controlling the first protection switch through the comparison module and a second logical protection for the heating module is realized by controlling the second protection switch through the control module, so as to prevent the heating module from being damaged due to continuous heating.

### BRIEF DESCRIPTION OF THE DRAWINGS

In order to more clearly illustrate technical solutions of the present application, the accompanying drawings required to be used in the embodiments are briefly described below, it should be understood that the following drawings illustrate only some embodiments of the present application, and therefore should not be considered as limiting the protection scope of the present application. In the various drawings, similar components are numbered similarly.
FIG. 1 is a schematic diagram of a first structure of an over-temperature protection circuit according to an embodiment of the present application.
FIG. 2 is a schematic structural diagram of a temperature detection module according to an embodiment of the present application.
FIG. 3 is a schematic diagram of a second structure of an over-temperature protection circuit according to an embodiment of the present application.
FIG. 4 is a schematic diagram of a third structure of an over-temperature protection circuit according to an embodiment of the present application.
FIG. 5 is a schematic diagram of a fourth structure of an over-temperature protection circuit according to an embodiment of the present application.

Description of reference numerals:
100-over-temperature protection circuit, 200-heating module; 110-temperature detection module, 120-comparison module, 130-control module, 140-first protection switch, 150-second protection switch, 160-logic processing module; 111-voltage divider circuit; 121-comparison voltage divider circuit; 161-NAND logical switch;
200-1-first heating module, 200-N-Nth heating module, 110-1-first temperature detection module, 110-N-Nth temperature detection module, 120-1-first comparison module, 120-N-Nth comparison module, 140-1-first first protection switch, 140-N-Nth first protection switch, 150-1-first second protection switch, 150-N-Nth second protection switch, 121-1-first comparison voltage divider circuit, 121-N-Nth comparison voltage divider circuit;
U1-comparator, U2-operational amplifier, Rt1-thermistor, R1-divided resistor, M1-first switching transistor, M2-second switching transistor; and
U2-1-first operational amplifier, U2-N-Nth operational amplifier, M1-1-first first switching transistor, M1-N-Nth first switching transistor, M2-1-first second switching transistor, M2-N-Nth second switching transistor.

### DETAILED DESCRIPTION OF THE EMBODIMENTS

The technical solutions in the embodiments of the present application are described clearly and completely in the following with reference to the accompanying drawings in the embodiments of the present application. Obviously, the described embodiments are just a part but not all of the embodiments of the present application.

In general, the components described and illustrated in the drawings herein may be arranged and designed in a variety of different configurations. Therefore, the following detailed description of the embodiments of the present application provided in the accompanying drawings is not intended to limit the scope of the present application, but merely represents selected embodiments of the present application. All other embodiments obtained by a person skilled in the art based on the embodiments of the present application without creative efforts shall fall within the protection scope of the present application.

In the following, the terms "includes", "have" and their cognate words, which may be used in various embodiments of the present application, are intended to represent specific features, numbers, steps, operations, elements, components, or a combination of the foregoing, and should not be construed to first exclude the presence or addition of one or more other features, one or more other numbers, one or more other steps, one or more other operations, one or more other elements, one or more other components, or a combinations of the foregoing.

In addition, the terms "first", "second", "third", and the like are only configured to distinguish descriptions, and cannot be understood as indicating or implying relative importance.

Unless otherwise defined, all terms (including technical terms and scientific terms) used herein have the same meaning as commonly understood by one of ordinary skill in the art to which the various embodiments of the present application belong. The terms (such as those defined in commonly used dictionaries) are to be interpreted as having the same meaning as the context in the relevant art and will not be interpreted as having an idealized or overly formal meaning unless expressly so defined in various embodiments of the present application.

### Embodiment 1

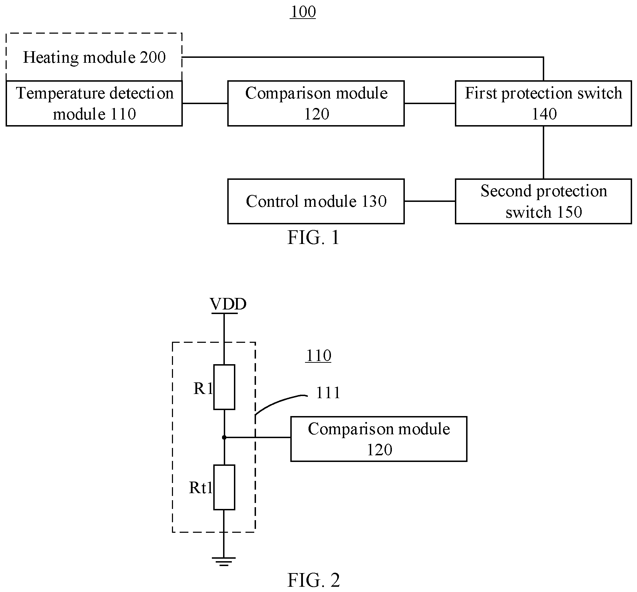

Referring to FIG. 1, FIG. 1 is a schematic diagram of a first structure of an over-temperature protection circuit according to an embodiment of the present application.

The over-temperature protection circuit 100 in FIG. 1 should be configured to control a running state of a heating module 200 connected to the over-temperature protection circuit 100, which includes a temperature detection module 110, a comparison module 120, a control module 130, and a first protection switch 140 and a second protection switch 150 connected in series;
the temperature detection module 110 is disposed on the heating module 200 and configured to convert obtained temperature information of the heating module 200 into a voltage signal;
the comparison module 120 is configured to output a control level to the first protection switch 140 according to the voltage signal and output a feedback signal including an on-off state of the first protection switch 140 to the control module 130;
the first protection switch 140 is connected to the heating module 200, and is configured to be adjusted to be in an on-state or an off-state according to the control level;
the control module 130 is configured to output a control signal to the second protection switch 150; and
the second protection switch 150 is configured to be adjusted to be in an on-state or an off-state according to the control signal.

A type of the heating module 200 is set according to requirements, and the heating module 200 is any device that heats up after being powered on. For ease of understanding, in the embodiments of the present application, the heating module 200 is a ceramic heating plate. In a power-on heating process of the heating module 200, the over-temperature protection circuit 100 is configured to control a power-on state of the heating module 200, protect the heating module 200, and prevent the heating module 200 from catching fire.

Specifically, the temperature detection module 110 is connected to the heating module 200 to obtain temperature information of the heating module 200 in real-time. Since the comparison module 120 cannot directly obtain the temperature information of the heating module 200, the temperature detection module 110 converts the temperature information into a voltage signal, and outputs the voltage signal to the comparison module 120.

The comparison module 120 determines the temperature information of the heating module 200 according to the voltage signal output by the temperature detection module 110. When a temperature of the heating module 200 exceeds a temperature threshold, a control level is output to the first protection switch 140 to control the on-off state of the first protection switch 140, where the temperature threshold is set according to actual requirements, which is not limited herein. Meanwhile, the comparison module 120 is further configured to use the control level as a feedback signal and output the feedback signal to the control module 130, so that the control module 130 can determine the on-off state of the first protection switch 140 according to the feedback signal input. The first protection switch 140 is connected to the heating module 200, and is adjusted to be in an on-state or an off-state according to the control level output by the comparison module 120. When the first protection switch 140 is adjusted to be in the off-state, the heating module 200 is powered off and stops heating. An over-temperature protection is performed on the heating module 200 by using the on-off state of the first protection switch 140, so that an excessively high temperature of the heating module 200 is prevented, and a first physical protection for the heating module 200 is realized.

The control module 130 is configured to output the control signal to the second protection switch 150. The on-off state of the second protection switch 150 is adjusted by using the control module 130 when the heating module 200 should stop heating but the first protection switch 140 is still in the on-state, so that a second logical protection for the heating module 200 is realized.

The first physical protection for the heating module 200 is realized by controlling the first protection switch 140 through the comparison module 120, and the second logical protection for the heating module 200 is realized by controlling the second protection switch 150 through the control module 130, thereby preventing the heating module 200 from being damaged due to continuous heating.

Referring to FIG. 2, FIG. 2 is a schematic structural diagram of a temperature detection module according to an embodiment of the present application.

Exemplarily, the temperature detection module 110 includes a voltage divider circuit 111, and the voltage divider circuit 111 includes a thermistor Rt1;
the thermistor Rt1 is connected to the heating module 200; and
the voltage divider circuit 111 is configured to obtain the voltage signal according to a resistance value of the thermistor Rt1 and output the voltage signal to the comparison module 120.

A type of the thermistor Rt1 is selected according to actual requirements, the thermistor Rt1 may be a thermistor Rt1 with a positive temperature coefficient, or may be a thermistor Rt1 with a negative temperature coefficient, which is not limited herein. The number of the thermistors Rt1 is also set according to actual requirements, which is not limited herein. For ease of understanding, in the embodiments of the present application, the thermistor Rt1 is a thermistor Rt1 with a positive temperature coefficient.

The thermistor Rt1 is a sensor resistor, and a resistance value of the thermistor Rt1 changes according to a temperature. In this embodiment, the thermistor Rt1 may be attached to the heating module 200 to improve the precision of the temperature detection module 110. It should be understood that the voltage divider circuit 111 includes the thermistor Rt1, and further includes a voltage divider device. For ease of understanding, in this embodiment of the present application, the voltage divider device is implemented by a divided resistor R1, and the thermistor Rt1 and the voltage divider device together form the voltage divider circuit 111. One terminal of the divided resistor R1 is connected to a power supply, the other terminal of the divided resistor R1 is grounded through the thermistor Rt1, and the comparison module 120 is connected to a node between the thermistor Rt1 and the divided resistor R1. The voltage divider circuit 111 obtains the voltage signal according to the resistance value of the thermistor Rt1, and outputs the voltage signal to the comparison module 120.

It should also be understood that, in a case that the thermistor Rt1 is a thermistor Rt1 with a negative temperature coefficient, positions of the divided resistor R1 and the thermistor Rt1 need to be exchanged. The temperature detection module 110 further includes other circuits such as a filter circuit, or includes other devices such as a protection resistor, and the other devices and circuits are set according to actual requirements, which is not limited herein.

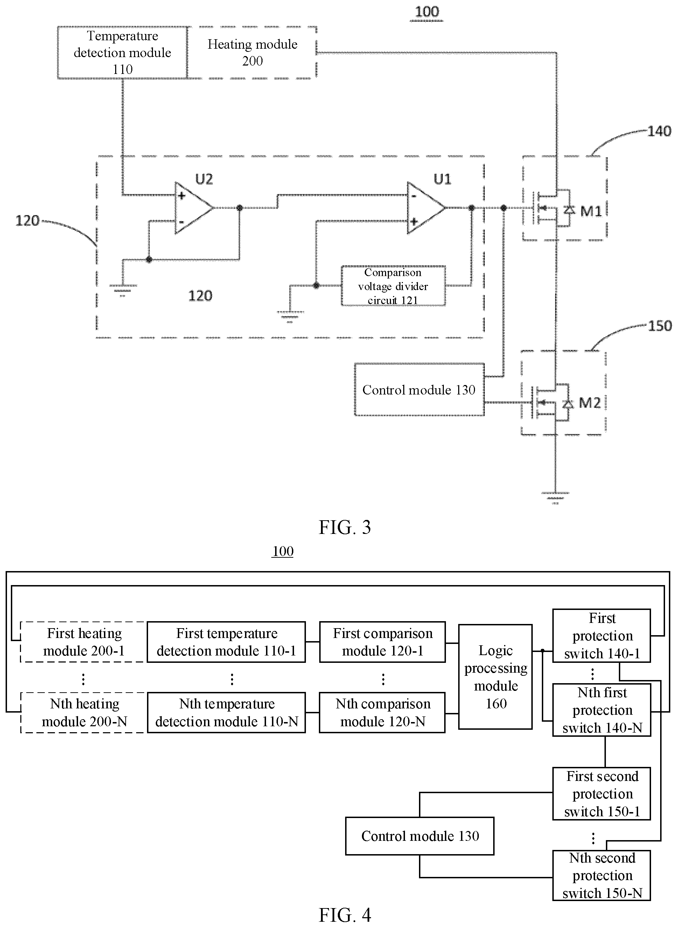

Referring to FIG. 3, FIG. 3 is a schematic diagram of a second structure of an over-temperature protection circuit according to an embodiment of the present application.

Exemplarily, the comparison module 120 includes a comparator U1 and a comparison voltage divider circuit 121;
an inverting input terminal of the comparator U1 is connected to the temperature detection module 110, an output terminal of the comparator U1 is connected to a non-inverting input terminal of the comparator U1 through the comparison voltage divider circuit 121, and the output terminal of the comparator U1 is further connected to the first protection switch 140; and
the comparator U1 is configured to output the control level to the first protection switch 140 according to the voltage signal and a signal of the comparison voltage divider circuit 121.

After the temperature detection module 110 converts the obtained temperature information of the heating module 200 into a voltage signal, the voltage signal is input to the inverting input terminal of the comparator U1, and a signal of the comparison voltage divider circuit 121 is input to the non-inverting input terminal of the comparator U1. The signal input into the inverting input terminal and the signal input into the non-inverting input terminal are compared by the comparator U1, that is, the control level is input into the first protection switch 140 according to the voltage signal and the signal of the comparison voltage divider circuit121. For ease of understanding, in the embodiments of the present application, when a temperature of the heating module 200 continuously heated is relatively high, the comparator U1 outputs a control level at a low level to the first protection switch 140 according to the voltage signal and the signal of the comparison voltage divider circuit 121. When the temperature of the heating module 200 is low, the comparator U1 outputs a control level at a high level to the first protection switch 140 according to the voltage signal and the signal of the comparison voltage divider circuit 121.

It should be understood that the comparison voltage divider circuit 121 may be implemented by a plurality of resistors, or may be implemented by a diode, which is not limited herein. The comparator U1 outputs the control level at a low level to the first protection switch 140 to perform an over-temperature protection on the first protection switch 140, thereby preventing the heating module 200 from being damaged by continuous heating. The comparison voltage divider circuit 121 is configured to pull down a level of the non-inverting input terminal of the comparator U1, so that the voltage signal output by the temperature detection module 110 must be very low to cause the comparator U1 output the control level at a high level to the first protection switch 140. The level of the non-inverting input terminal of the comparator U1 is pulled down by using the comparison voltage divider circuit 121, so that after the first protection switch 140 performs the over-temperature protection on the heating module 200, the heating module 200 can perform heating only after the temperature of the heating module 200 reduced to a lower temperature, thereby preventing the heating module 200 from being damaged due to an excessively high temperature.

Exemplarily, the comparison module 120 further includes an operational amplifier U2;
a non-inverting input terminal of the operational amplifier U2 is connected to the temperature detection module 110, an output terminal of the operational amplifier U2 is connected to an inverting input terminal of the comparator U1, and the output terminal of the operational amplifier U2 is further connected to the inverting input terminal of the comparator U1; and
the operational amplifier U2 is configured to amplify the voltage signal.

The operational amplifier U2 is configured to amplify a level signal output by the temperature detection module 110 and input an amplified voltage signal to the inverting input terminal of the comparator U1. The comparator U1 outputs the control level to the first protection switch 140 according to the amplified voltage signal and the signal of the comparison voltage divider circuit 121. It should be understood that the operational amplifier U2 may also be connected to a negative feedback amplification resistor with a low resistance value, and details are not described herein again.

It should be understood that the comparison module 120 further includes other circuits such as a filter circuit, or includes other devices such as a protection resistor, and the other devices and circuits are set according to actual requirements, which is not limited herein.

Exemplarily, the comparison module 120 is further configured to output a feedback signal including an on-off state of the first protection switch 140 to the control module 130;
the control module 130 is further configured to determine the on-off state of the first protection switch 140 according to the feedback signal output by the comparison module 120; and
the control module 130 is further configured to output a control signal to the second protection switch 150 according to the on-off state of the first protection switch 140.

During an actual operation process of the over-temperature protection circuit 100, when any one of the temperature detection module 110, the comparison module 120, and the first protection switch 140 fails, it may result in damage to devices in the test device due to continuously heating. The control module 130 determines the on-off state of the first protection switch 140 in real-time according to the feedback signal input.

The control module 130 may determine a state of the heating module 200 according to a signal output by a sensor, and output a control signal to the second protection switch 150 to implement the second logical protection for the heating module 200. Meanwhile, the control module 130 may further determine the on-off state of the first protection switch 140 according to the feedback signal output by the comparison module 120. Based on a passing state of the first protection switch 140, it is determined that whether the first protection switch 140 performs a protection on the heating module 200. It should be understood that the control module 130 may also output a control signal to the second protection switch 150 according to information other than the on-off state of the first protection switch 140 and the signal output by the sensor, and details are not described herein again.

Specifically, when the temperature of the heating module 200 is relatively high and the first protection switch 140 is in an off-state, the control module 130 determines that the heating module 200 has been protected by the first protection switch 140 according to the on-off state of the first protection switch 140. In this case, the heating module 200 stops heating, the control module 130 may output the control signal to adjust the second protection switch 150 to be in an off-state, or the control module 130 may output the control signal to adjust the second protection switch 150 to be in an on-state, which is not limited herein.

When the temperature of the heating module 200 is relatively high, the comparison module 120 outputs the control level at a low level and the first protection switch 140 is in an on-state, and the control module 130 determines that the first protection switch 140 is not protecting the heating module 200 according to the on-off state of the first protection switch 140. In this case, the heating module 200 continues to heat, and the control module 130 outputs a control signal to adjust the second protection switch 150 to be in an off-state, so that the heating module 200 stops heating.

Exemplarily, the first protection switch 140 includes a first switching transistor M1;
a control terminal of the first switching transistor M1 is connected to the comparison module 120, a first terminal of the first switch is connected to the second protection switch 150, and a second terminal of the first switch is connected to the heating module 200; and
the first switching transistor M1 is configured to be adjusted to be in an on-state when the control level output by the comparison module 120 is a high level, and to be adjusted to be in an off-state when the control level output by the comparison module 120 is a low level.

When the heating module 200 is continuously heated such that the temperature is relatively high, the comparison module 120 outputs the control level at a low level to the control terminal of the first switching transistor M1, and the first switching transistor M1 is adjusted to be in an off-state, so that the heating module 200 stops heating and the heating module 200 is prevented from being damaged due to an excessively high temperature.

When the heating module 200 stops heating and the temperature is reduced to a lower temperature, the comparison module 120 outputs the control level at a high level to the control terminal of the first switching transistor M1, and the first switching transistor M1 is adjusted to be in an on-state, so that the heating module 200 starts heating, so as to adjust the temperature to a required temperature by using the heating module 200.

Exemplarily, the second protection switch 150 includes a second switching transistor M2;
a control terminal of the second switching transistor M2 is connected to the control module 130, a first terminal of the second switch is connected to the first protection switch 140, and a second terminal of the second switch is grounded; and
the second switching transistor M2 is configured to be adjusted to be in an on-state or an off-state according to the control signal.

The first switching transistor M1 and the second switching transistor M2 are connected in series. When the temperature of the heating module 200 is too high, the second switching transistor M2 is configured to be adjusted to be in an off-state under a condition that the first switching transistor M1 is adjusted to be in the off-state, so that the heating module 200 stops heating. Specifically, when the temperature of the heating module 200 does not exceed the temperature threshold, the first switching transistor M1 and the second switching transistor M2 are both in an on-state.

When the temperature of the heating module 200 does not exceed the temperature threshold, the comparison module 120 outputs the control level to the first switching transistor M1. When the first switching transistor M1 is adjusted to be in an off-state according to the control level, the second switching transistor M2 may be adjusted to be in an off-state or an on-state. When the first switching transistor M1 is in an on-state, the control module 130 determines that one of the temperature detection module 110, the comparison module 120, or the first switching transistor M1 has failed. The control module 130 outputs the control signal to the second switching transistor M2, and the second switching transistor M2 is adjusted to be in an off-state according to the control signal.

After the heating module 200 stops heating, the first switching transistor M1 and the second switching transistor M2 are both in an off-state, taking this situation as an example, and when the temperature of the heating module 200 is reduced to a lower temperature, the comparison module 120 outputs the control level to the first switching transistor M1, and the first switching transistor M1 is adjusted to be in an on-state. The control module 130 outputs the control signal to the second switching transistor M2, and the second switching transistor M2 is adjusted to be in an on-state to adjust the temperature to a required temperature by using the heating module 200.

The present application provides an over-temperature protection circuit, which should be configured to control a running state of a heating module connected to the over-temperature protection circuit, and the over-temperature protection circuit includes a temperature detection module, a comparison module, a control module, and a first protection switch and a second protection switch connected in series. The temperature detection module is disposed on the heating module and configured to convert obtained temperature information of the heating module into a voltage signal and output the voltage signal to the comparison module. The comparison module is configured to output a control level to the first protection switch according to the voltage signal. The control module is configured to output a control signal to the second protection switch. A first physical protection for the heating module is realized by controlling the first protection switch through the comparison module and a second logical protection for the heating module is realized by controlling the second protection switch through the control module, so as to prevent the heating module from being damaged due to continuous heating.

### Embodiment 2

Referring to FIG. 4, FIG. 4 a schematic diagram of a third structure of an over-temperature protection circuit according to an embodiment of the present application.

The over-temperature protection circuit 100 in FIG. 4 should be configured to control running states of a preset number of heating modules 200 connected to the over-temperature protection circuit, the over-temperature protection circuit includes a control module 130, a logic processing module 160, the preset number of temperature detection modules 110, the preset number of comparison modules 120, and the preset number of first protection switches 140 and second protection switches 150 respectively connected in series, where the preset number is greater than or equal to two;
each of the temperature detection modules 110 is disposed on a heating module 200 to be protected, and is configured to convert obtained temperature information of the heating module 200 into a voltage signal, and output the voltage signal to one of the comparison module 120;
each of the comparison modules 120 is configured to output a control level to the logic processing module 160 according to the voltage signal;
the logic processing module 160 is configured to output a logical level to all the first protection switches 140 according to the control level output by each of the comparison modules 120, and output a feedback signal including an on-off state of each of the first protection switch 140 to the control module 130;
each of the first protection switches 140 is connected to one of the heating modules 200 and configured to be adjusted to be in an on-state or off-state according to the logical level; and
the control module 130 is configured to output a control signal to the second protection switches 150; and
each of the second protection switches 150 is configured to be adjusted to be in an on-state or an off-state according to the control signal.

Generally, a device may include a plurality of heating modules 200 that require an over-temperature protection, and a first protection switch 140 and a second protection switch 150 connected in series may be provided corresponding to one heating module 200. For ease of understanding, the preset number of heating modules 200 in the embodiments of the present application show a first heating module 200-1 and an Nth heating module 200-N; the preset number of temperature detection modules 110 show a first temperature detection module 110-1 and an Nth temperature detection module 110-N; the preset number of comparison modules 120 show a first comparison module 120-1 and an Nth comparison module 120-N; the preset number of first protection switches 140 show a first protection switch 140-1 and an Nth first protection switch 140-N; and the preset number of second protection switches 150 show a first second protection switch 150-1 and an Nth second protection switch 150-N. A comparison module 120 determines temperature information of a heating module 200 according to the voltage signal output by a temperature detection module 110. When a temperature of the heating module 200 exceeds a temperature threshold, the comparison module 120 outputs the control level to the logic processing module 160, where the temperature threshold is set according to actual requirements, which is not limited herein. The logic processing module 160 outputs a logical level to all the first protection switches 140 according to the control level output by each of the comparison modules 120 to control on-off states of all the first protection switches 140, that is, the logic processing module 160 is configured to simultaneously adjust all the first protection switches 140 to be in an on-state or an off-state.

The first protection switch 140 is connected to the heating module 200, and is adjusted to be in an on-state or an off-state according to the logical level output by the logic processing module 160. An over-temperature protection is performed on the heating module 200 by using the on-off state of the first protection switch 140, so that the temperature of the heating module 200 is prevented from being too high, and the first physical protection for the heating module 200 is realized.

**In** an actual operation process of the over-temperature protection circuit 100, when a failure is occurred on any path of the first protection switch 140 and the second protection switch 150 connected in series, devices in a test device would be damaged due to continuously heating. The control module 130 determines the on-off state of the first protection switch 140 in real-time according to the feedback signal input. Meanwhile, the control module 130 is configured to output the control signal to the second protection switch 150. The on-off state of the second protection switch 150 is adjusted by using the control module 130 in a case that the heating module 200 should stop heating but the first protection switch 140 is still in an on-state, so as to realize a second logical protection for the heating module 200.

The first physical protection for the heating module 200 is realized by controlling the first protection switch 140 through the comparison module 120 and the logic processing module 160, and the second logical protection for the heating module 200 is realized by controlling the second protection switch 150 through the control module 130, thereby preventing the heating module 200 from being damaged due to continuous heating.

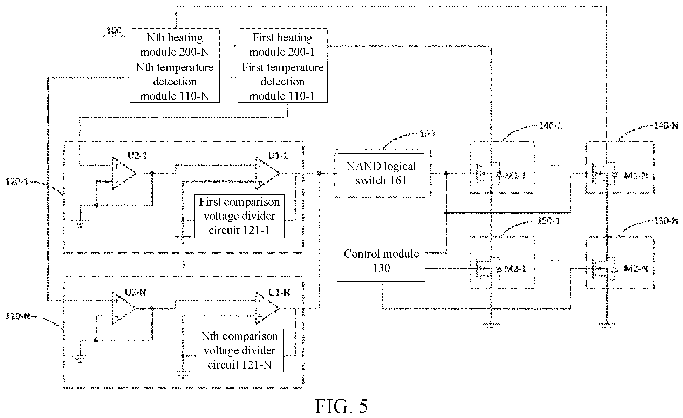

Referring to FIG. 5, FIG. 5 is a schematic diagram of a fourth structure of an over-temperature protection circuit according to an embodiment of the present application.

Exemplarily, the logic processing module 160 includes an NAND logical switch 161;
the NAND logical switch 161 is configured to output the logical level at a low level to all the first protection switches 140 when the control level output by at least one of the comparison modules 120 is at a low level; and
the NAND logical switch 161 is further configured to output the logical level at a high level to all the first protection switches 140 when the control level output by each of the comparison modules 120 is a high level.

When the heating module 200 is continuously heated such that the temperature is relatively high, the comparison module 120 outputs the control level at a low level to a NOT logical switch. When the control level output by at least one comparison module 120 is a low level, the NOT logical switch outputs the logical level at a low level to all the first protection switches 140, so as to simultaneously adjust all the first protection switches 140 to be in an off-state, thereby avoiding a situation that a failure is occurred on any path of the first protection switch 140 and the second protection switch 150 connect in series but the first protection switch 140 is not adjusted to be in an off-state, and thereby further preventing the heating module 200 from being damaged due to an excessively high temperature.

When the temperature of each of the heating modules 200 is reduced to a lower temperature, each the comparison module 120 output the control level at a high-level to the NOT logical switch, and the NOT logical switch outputs the logical level at a high level to all the first protection switches 140 to adjust all first switching transistors M1 to be in an on-state, so that the heating modules 200 start heating, so as to adjust the temperature to a required temperature by using the heating modules 200.

Exemplarily, the first protection switch 140 includes a first switching transistor M1;
a control terminal of the first switching transistor M1 is connected to the logic processing module 160, a first terminal of the first switch is connected to one of the second protection switches 150, and a second terminal of the first switch is connected to one of the heating modules 200; and
the first switching transistor M1 is configured to be adjusted to be in an on-state when the logical level output by the logic processing module 160 is a high level, and to be adjusted to be in an off-state when the logical level output by the logic processing module 160 is a low level.

For ease of understanding, the preset number of first switching transistors M1 in the embodiments of the present application show a first switching transistor M1-1 and an Nth first switching transistor M1-N. When a heating module 200 is continuously heated such that the temperature is relatively high, the logic processing module 160 outputs the logical level at a low level to the control terminal of each of the first switching transistors M1, and all the first switching transistors M1 are adjusted to be in an off-state, so that all the heating modules 200 stop heating, and damage to any heating module 200 due to an excessively high temperature is avoided.

When the temperature of each of the heating modules 200 is reduced to a lower temperature, the logic processing module 160 outputs the logical level at a high level to the control terminal of each of the first switching transistors M1, all the first switching transistors M1 are adjusted to be in an on-state, and all the heating modules 200 start heating to adjust the temperature to a required temperature by using the heating modules 200.

Exemplarily, the comparison module 120 includes a comparator U1 and a comparison voltage divider circuit 121;
an inverting input terminal of the comparator U1 is connected to a temperature detection module 110 of the temperature detection modules 110, an output terminal of the comparator U1 is connected to a non-inverting input terminal of the comparator U1 through the comparison voltage divider circuit 121, and the output terminal of the comparator U1 is further connected to the logic processing module 160; and
the comparator U1 is configured to output the control level to the logic processing module 160 according to the voltage signal and a signal of the comparison voltage divider circuit 121.

For ease of understanding, the preset number of comparators U1 in the embodiments of the present application show a first comparator U1-1 and an Nth comparator U1-N; and the preset number of comparison voltage divider circuits 121 show a first comparison voltage divider circuit 121-1 and an Nth comparison voltage divider circuit 121-N. The signal input into the inverting input terminal and the signal input into the non-inverting input terminal are compared by the comparator U1, that is, the control level is output to the logic processing module 160 according to the voltage signal and a signal of the comparison voltage divider circuit 121. In this embodiment, the comparison module 120 further includes an operational amplifier U2 configured to amplify a level signal output by the temperature detection module 110. The preset number of operational amplifiers U2 show a first operational amplifier U2-1 and an Nth operational amplifier U2-N.

For ease of understanding, in the embodiments of the present application, when the temperature of any one of the continuously heated heating modules 200 is relatively high, the comparator U1 in a path that the first protection switch 140 and the second protection switch 150 connected in serials, corresponding to the heating module 200 has a relatively high temperature, outputs a control level at a low level to the logic processing module 160 according to the voltage signal and the signal of the comparison voltage divider circuit 121. When the temperature of the heating module 200 is relatively low, the comparator U1 outputs a control level at a high level to the logic processing module 160 according to the voltage signal and the signal of the comparison voltage divider circuit 121. When the comparator U1 in any path that the first protection switch 140 and the second protection switch 150 connected in serials outputs the control level at a low level to the logic processing module 160, the logic processing module 160 adjusts each of the first protection switches 140 to be in an off-state.

Exemplarily, the logic processing module 160 is further configured to output a feedback signal including an on-off state of each first protection switch 140 of the first protection switches 140 to the control module 130;
the control module 130 is further configured to determine the on-off state of the first protection switch 140 according to the feedback signal output by the logic processing module 160; and
the control module 130 is further configured to respectively output different control signals to each of the second protection switches 150 according to the on-off state of the first protection switch 140.

The logic processing module 160 is further configured to take the logical level as the feedback signal and output the feedback signal to the control module 130, so that the control module 130 can determine the on-off state of the first protection switch 140 according to the feedback signal input. The control module 130 may determine a state of the heating module 200 according to a signal output by a sensor, and output the control signal to the second protection switch 150 to implement a second logical protection for the heating module 200. Meanwhile, the control module 130 may further determine the on-off state of the first protection switch 140 according to the feedback signal output by the logic processing module 160. Based on a passing state of the first protection switch 140, it is determined that whether the first protection switch 140 performs a protection on the heating module 200.

When the temperature of the heating module 200 is relatively high, the logic processing module 160 outputs a logical level at a low level and the first protection switch 140 is in an on-state, the control module 130 determines that the first protection switch 140 is not protecting the heating module 200 according to the on-off state of the first protection switch 140. In this case, the heating module 200 continues to heat, and the control module 130 outputs a control signal to adjust the second protection switch 150 to be in an off-state, so that the heating module 200 stops heating.

The embodiments of the present application further provide a test device, which includes a heating module 200, and an over-temperature protection circuit 100 according to Embodiment 1, or an over-temperature protection circuit 100 according to Embodiment 2, where the over-temperature protection circuit 100 is connected to the heating module 200.

Specifically, the test device may be a PCR module or a POCT device, which is not described herein. A temperature of the test device is adjusted to a required temperature by the heating module 200. Meanwhile, when the heating module 200 is continuously heated and the temperature is too high, the over-temperature protection circuit 100 is configured to control the heating module 200 to stop heating, so as to reduce the temperature of the heating module 200 and prevent devices in the test device from being damaged due to an excessively high temperature.

The preferred embodiments of the present application are described in detail above with reference to the accompanying drawings, but the present application is not limited to the specific details in the above embodiments, within the technical concept scope of the present application, various simple modifications can be made to the technical solutions of the present application, and these simple modifications all fall within the protection scope of the present application.

In addition, it should be noted that the specific technical features described in the above specific embodiments may be combined in any suitable manner without contradiction. In order to avoid unnecessary repetition, various possible combinations are not further described in the present application.

In addition, any combination of the various embodiments of the present application may also be performed as long as it does not violate the idea of the present application, which should also be regarded as the content disclosed in the present application.

## Claims

1. An over-temperature protection circuit, configured to control a running state of a heating module connected to the over-temperature protection circuit, wherein the over-temperature protection circuit comprises a temperature detection module, a comparison module, a control module, and a first protection switch and a second protection switch connected in series;
wherein the temperature detection module is disposed on the heating module and configured to convert obtained temperature information of the heating module into a voltage signal, and output the voltage signal to the comparison module;
the comparison module is configured to output a control level to the first protection switch according to the voltage signal;
the first protection switch is connected to the heating module and is configured to be adjusted to be in an on-state or an off-state according to the control level;
the control module is configured to output a control signal to the second protection switch; and
the second protection switch is configured to be adjusted to be in an on-state or an off-state according to the control signal.

2. The over-temperature protection circuit according to claim 1, wherein the temperature detection module comprises a voltage divider circuit, and the voltage divider circuit comprises a thermistor;
the thermistor is connected to the heating module; and
the voltage divider circuit is configured to obtain the voltage signal according to a resistance value of the thermistor, and output the voltage signal to the comparison module.

3. The over-temperature protection circuit according to claim 1, wherein the comparison module comprises a comparator and a comparison voltage divider circuit;
an inverting input terminal of the comparator is connected to the temperature detection module, an output terminal of the comparator is connected to a non-inverting input terminal of the comparator through the comparison voltage divider circuit, and the output terminal of the comparator is further connected to the first protection switch; and
the comparator is configured to output the control level to the first protection switch according to the voltage signal and a signal of the comparison voltage divider circuit.

4. The over-temperature protection circuit according to claim 1, wherein the comparison module further comprises an operational amplifier;
a non-inverting input terminal of the operational amplifier is connected to the temperature detection module, an output terminal of the operational amplifier is connected to an inverting input terminal of the comparator, and the output terminal of the operational amplifier is further connected to the inverting input terminal of the comparator; and
the operational amplifier is configured to amplify the voltage signal.

5. The over-temperature protection circuit according to claim 1, wherein the comparison module is further configured to output a feedback signal comprising an on-off state of the first protection switch to the control module;
the control module is further configured to determine the on-off state of the first protection switch according to the feedback signal output by the comparison module; and
the control module is further configured to output different control signals to the second protection switch according to the on-off state of the first protection switch.

6. The over-temperature protection circuit according to claim 1, wherein the first protection switch comprises a first switching transistor;
a control terminal of the first switching transistor is connected to the comparison module, a first terminal of the first switch is connected to the second protection switch, and a second terminal of the first switch is connected to the heating module; and
the first switching transistor is configured to be adjusted to be in an on-state when the control level output by the comparison module is a high level, and to be adjusted to be in an off-state when the control level output by the comparison module is a low level.

7. The over-temperature protection circuit according to claim 1, wherein the second protection switch comprises a second switching transistor;
a control terminal of the second switching transistor is connected to the control module, a first terminal of the second switch is connected to the first protection switch, and a second terminal of the second switch is grounded; and
the second switching transistor is configured to be adjusted to be in an on-state or an off-state according to the control signal.

8. An over-temperature protection circuit, configured to control running states of a preset number of heating modules connected to the over-temperature protection circuit, wherein the over-temperature protection circuit comprises a control module, a logic processing module, the preset number of temperature detection modules, the preset number of comparison modules, and the preset number of first protection switches and second protection switches respectively connected in series, wherein the preset number is greater than or equal to two;
each of the temperature detection modules is disposed on a heating module to be protected, and is configured to convert obtained temperature information of the heating module into a voltage signal, and output the voltage signal to one of the comparison modules;
each of the comparison modules is configured to output a control level to the logic processing module according to the voltage signal;
the logic processing module is configured to output a logical level to all the first protection switches according to the control level output by each of the comparison modules;
each of the first protection switches is connected to one of the heating modules and configured to be adjusted to be in an on-state or an off-state according to the logical level;
the control module is configured to output a control signal to the second protection switches; and
each of the second protection switches is configured to be adjusted to be in an on-state or an off-state according to the control signal.

9. The over-temperature protection circuit according to claim 8, wherein the logic processing module comprises an NAND logical switch;
the NAND logical switch is configured to output the logical level at a low level to all the first protection switches when the control level output by at least one of the comparison modules is a low level; and
the NAND logical switch is further configured to output the logical level at a high level to all the first protection switches when the control level output by each of the comparison modules is a high level.

10. The over-temperature protection circuit according to claim 9, wherein a first protection switch of the first protection switches comprises a first switching transistor;
a control terminal of the first switching transistor is connected to the logic processing module, a first terminal of the first switch is connected to one of the second protection switches, and a second terminal of the first switch is connected to one of the heating modules; and
the first switching transistor is configured to be adjusted to be in an on-state when the logical level output by the logic processing module is a high level, and to be adjusted to be in an off-state when the logical level output by the logic processing module is a low level.

11. The over-temperature protection circuit according to claim 8, wherein a comparison module of the comparison modules comprises a comparator and a comparison voltage divider circuit;
an inverting input terminal of the comparator is connected to a temperature detection module of the temperature detection modules, an output terminal of the comparator is connected to a non-inverting input terminal of the comparator through the comparison voltage divider circuit, and the output terminal of the comparator is further connected to the logic processing module; and
the comparator is configured to output the control level to the logic processing module according to the voltage signal and a signal of the comparison voltage divider circuit.

12. The over-temperature protection circuit according to claim 8, wherein the logic processing module is further configured to output a feedback signal comprising an on-off state of each first protection switch of the first protection switches to the control module;
the control module is further configured to determine the on-off state of the first protection switch according to the feedback signal output by the logic processing module; and
the control module is further configured to respectively output different control signals to each of the second protection switches according to the on-off state of the first protection switch.

13. A test device, comprising a heating module, and an over-temperature protection circuit according to any one of claims 1 to 7, or according to any one of claims 8 to 12, wherein the over-temperature protection circuit is connected to the heating module.
